# EUROPEAN PATENT APPLICATION

(11) **EP 4 163 114 A1**
(43) Date of publication of application: **12.04.2023**
(21) Application number: 21842187.3
(22) Date of filing: 07.06.2021
(51) Int. Cl.: B33Y 10/00, B23K 9/032, B23K 9/04, B23K 9/12

(54) **MANUFACTURING METHOD FOR MULTI-LAYER MOLDED ARTICLE**

(30) Priority: 15.07.2020 JP 2020121580
(71) Applicant: KABUSHIKI KAISHA KOBE SEIKO SHO (KOBE STEEL, LTD.), Hyogo 651-8585 (JP)
(72) Inventor: HUANG, Shuo, Kobe-shi, Hyogo 651-2271 (JP)
(74) Representative: Müller-Boré & Partner Patentanwälte PartG mbB
(86) International application number: PCT/JP2021/021575
(87) International publication number: WO 2022/014202

(57) **Abstract**

The present invention is a manufacturing method for a multi-layer molded article in which a molded article is molded by forming and laminating a bead weld obtained by melting and solidifying a filler material emitted from a torch, and which includes a first molding step in which a bead weld is formed and laminated in a first welding control mode, and a second molding step in which the bead weld is formed and laminated in a second welding control mode having higher heat input than the first welding control mode. The first welding control mode in the first molding step is a forward/reverse feed control in which the filler material emitted from the torch is subjected to forward/reverse feeding, while the current waveform of power that is supplied to the filler material from a power source is synchronized with the forward/reverse feeding of the filler material.

## Description

### TECHNICAL FIELD

The present invention relates to a method for manufacturing an additively-manufactured object.

### BACKGROUND ART

In recent years, the needs for 3D printers as a production means are increasing, and research and development are carried out for practical use in an aircraft industry and the like, especially for application to metal materials. A 3D printer using a metal material uses a heat source such as a laser arc to melt metal powder or a metal wire, and deposits the molten metal to manufacture an additively-manufactured object.

Patent Literature 1 describes that a contoured portion is made by additive manufacturing, and an inside of the contoured portion is filled with a metal material in a wavy filling pattern having a specific wavelength to manufacture a manufactured object.

### CITATION LIST

### PATENT LITERATURE

Patent Literature 1: JP 2019-111582 A

### SUMMARY OF INVENTION

### TECHNICAL PROBLEM

When manufacturing an additively-manufactured object, it is required to improve a manufacturing efficiency while preventing occurrence of an unwelded portion. As in Patent Literature 1, by filling the inside of the contoured portion with the filling pattern having a specific wavelength, it is possible to improve the manufacturing efficiency while reducing the number of start parts and end parts of beads. However, it is difficult to favorably prevent the occurrence of the unwelded portions by only filling the inside of the contoured portion with the filling pattern having a specific wavelength, although the number of the start parts and end parts of the beads could be reduced.

Therefore, an object of the present invention is to provide a method for manufacturing an additively-manufactured object, by which the additively-manufactured object with high precision can be efficiently manufactured while occurrence of an unwelded portion is prevented.

### SOLUTION TO PROBLEM

The present invention includes the following configurations.

A method for manufacturing an additively-manufactured object, including forming weld beads obtained by melting and solidifying a filler metal sent out from a torch and depositing the weld beads to manufacture an additively-manufactured object, the method including:
a first manufacturing step of forming and depositing the weld bead in a first welding control mode; and
a second manufacturing step of forming and depositing the weld bead in a second welding control mode with a higher heat input than in the first welding control mode,
wherein the first welding control mode in the first manufacturing step is a forward and reverse feeding control in which, while the filler metal sent out from the torch is fed sequentially in a forward direction and a reverse direction, a current waveform of a power supplied to the filler metal from a power source is synchronized with the forward and reverse feeding of the filler metal.

### ADVANTAGEOUS EFFECTS OF INVENTION

According to the present invention, an additively-manufactured object with high precision can be efficiently manufactured while occurrence of an unwelded portion is prevented.

### BRIEF DESCRIPTION OF DRAWINGS

FIG. 1 is a schematic configuration diagram of a manufacturing system for manufacturing an additively-manufactured object by a manufacturing method in an embodiment of the present invention.
FIG. 2 is a schematic side view of an additively-manufactured object illustrating an example of the additively-manufactured object to be manufactured.
FIG. 3A is a schematic side view of an additively-manufactured object in the middle of manufacturing process of the additively-manufactured object.
FIG. 3B is a schematic side view of the additively-manufactured object in the middle of manufacturing process of the additively-manufactured object.
FIG. 3C is a schematic side view of the additively-manufactured object in the middle of manufacturing process of the additively-manufactured object.
FIG. 4A and FIG. 4B are diagrams illustrating an outline of forward and reverse feeding control, where FIG. 4A is a side view of a torch during forward feeding, and FIG. 4B is a side view of the torch during reverse feeding.
FIG. 5 is a graph illustrating a relationship between a feeding direction of a filler metal and a current in the forward and reverse feeding control.
FIG. 6 is an illustrative diagram illustrating an outline of constant voltage power supply control.
FIG. 7 is a graph indicating a current waveform for illustrating an outline of pulse power supply control.
FIG. 8 is a schematic side view of an additively-manufactured object for illustrating a method of selecting a welding control mode based on a shape.
FIG. 9 is a cross-sectional view of another additively-manufactured object.

### DESCRIPTION OF EMBODIMENTS

Hereinafter, embodiments of the present invention are described in detail with reference to the drawings.

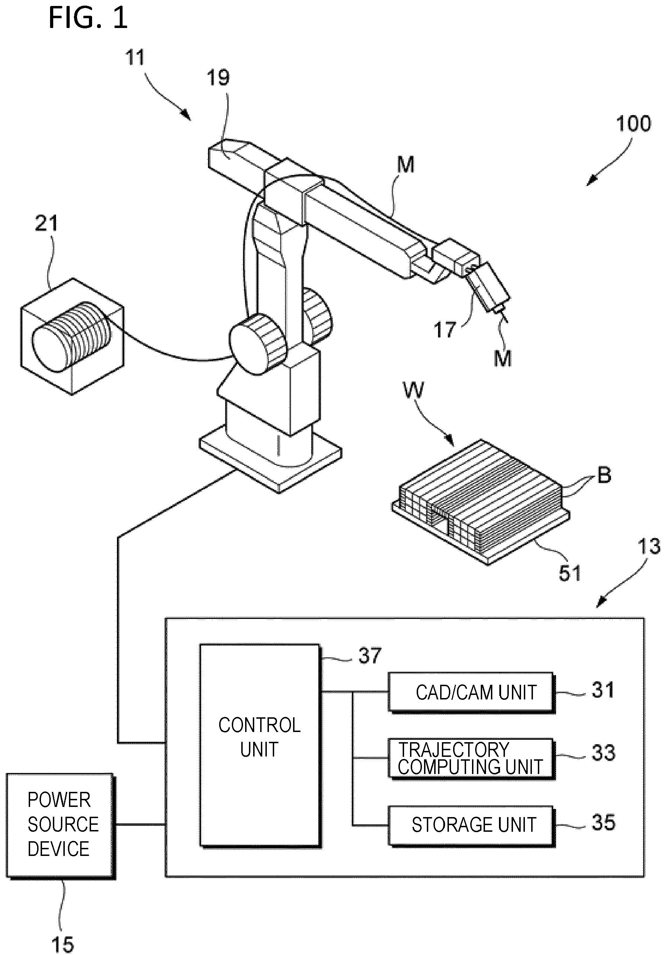

FIG. 1 is a configuration diagram of a manufacturing system used for manufacturing an additively-manufactured object in the present invention.

A manufacturing system 100 for the additively-manufactured object in the present configuration includes an additive manufacturing device 11, a controller 13 that integrally controls the additive manufacturing device 11, and a power source 15.

The additive manufacturing device 11 includes a welding robot 19 in which a torch 17 is provided on a tip shaft, and a filler metal supply unit 21 that supplies a filler metal (welding wire) M to the torch 17.

The welding robot 19 is a multi-joint robot, and a filler metal M is supported by the torch 17 attached to the tip shaft of a robot arm so as to be continuously suppliable. A position and a posture of the torch 17 can be set three-dimensionally desirably within a movable range of the robot arm.

The torch 17 includes a shield nozzle (not shown), and a shielding gas is supplied from the shield nozzle. An arc welding method may be either a consumable electrode-based method such as shielded metal arc welding method or carbon dioxide gas arc welding method, or a non-consumable electrode-based method such as TIG welding method or plasma arc welding method, and is appropriately selected depending on an additively-manufactured object to be manufactured.

For example, in the case of the consumable electrode-based method, a contact tip is disposed inside the shield nozzle, and the contact tip holds the filler metal M to which a melting current is supplied. The torch 17 generates an arc from a tip of the filler metal M in a shielding gas atmosphere while holding the filler metal M. The filler metal M is fed from the filler metal supply unit 21 to the torch 17 by a delivery mechanism (not shown) attached to the robot arm or the like. Then, when the filler metal M fed continuously is melted and solidified while the torch 17 is moved, linear weld beads B, which is a melt-solidified body of the filler metal M, is formed on a base plate 51, and an additively-manufactured object W composed of the weld beads B is manufactured.

A CAD/CAM unit 31 creates shape data of the additively-manufactured object W to be manufactured, and then divides the data into a plurality of layers to generate layer shape data representing a shape of each layer. A trajectory computing unit 33 obtains a movement trajectory of the torch 17 based on the generated layer shape data. A storage unit 35 stores data such as the generated layer shape data and the movement trajectory of the torch 17.

A control unit 37 drives the welding robot 19 by executing a drive program based on the layer shape data and the movement trajectory of the torch 17 which are stored in the storage unit 35. That is, the welding robot 19 moves the torch 17 while causing the filler metal M to melt by an arc based on the movement trajectory of the torch 17 generated by the trajectory computing unit 33 in response to a command from the controller 13. Accordingly, the filler metal M is melted by the arc to form the weld beads B on the base plate 51, and the additively-manufactured object W is manufactured.

The base plate 51 is made of a metal plate such as a steel plate, and has an area basically larger than a bottom surface (surface of the lowermost layer) of the additively-manufactured object W. The shape of the base plate 51 is not limited to a plate shape, and the base plate 51 may be a base having another shape such as a block shape or a rod shape.

As the filler metal M, any commercially available welding wire can be used. For example, a wire specified by solid wires for MAG and MIG welding of mild steel, high tensile strength steel and low temperature service steel (JISZ 3312), flux cored wires for arc welding of mild steel, high tensile strength steel and low temperature service steel (JISZ 3313), or the like can be used.

Next, an example of the additively-manufactured object manufactured by the manufacturing method in the present embodiment is described.

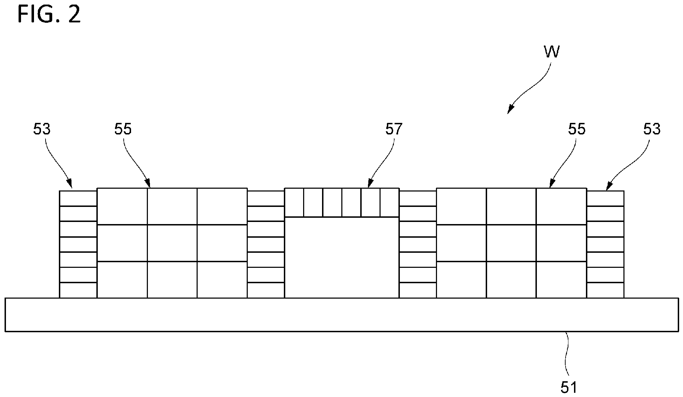

FIG. 2 is a schematic side view of the additively-manufactured object illustrating an example of the additively-manufactured object.

As illustrated in FIG. 2, the additively-manufactured object W is formed on the base plate 51 and includes frame portions 53 and internal manufactured portions 55 manufactured inside the frame portions 53. The additively-manufactured object W includes a protruding portion 57 spanning upper ends of the two frame portions 53. In the additively-manufactured object W, for example, a portion surrounded by the frame portions 53 and the protruding portion 57, which are manufactured on the base plate 51, is used as a cooling flow path.

When the additively-manufactured object W is manufactured, the frame portions 53, which are outer peripheral portions of a manufactured object, are required to be manufactured with high precision since inner volumes vary greatly depending on a height, a width, a manufacturing position, and the like. Further, the protruding portion 57 that spans the frame portions 53 and becomes a ceiling portion of the flow path is also required to be manufactured with high precision. Moreover, since the protruding portion 57 is greatly affected by gravity during the manufacturing, it is necessary to prevent dripping during the manufacturing. The internal manufactured portion 55 inside the frame portion 53 is required to be efficiently manufactured while occurrence of an unwelded portion is prevented.

Therefore, in the present embodiment, as described below, the control unit 37 controls the power source 15, the filler metal supply unit 21, and the like, and switches a welding control mode when the weld beads B is formed by the torch 17 to manufacture the frame portions 53, the protruding portion 57, and the internal manufactured portions 55.

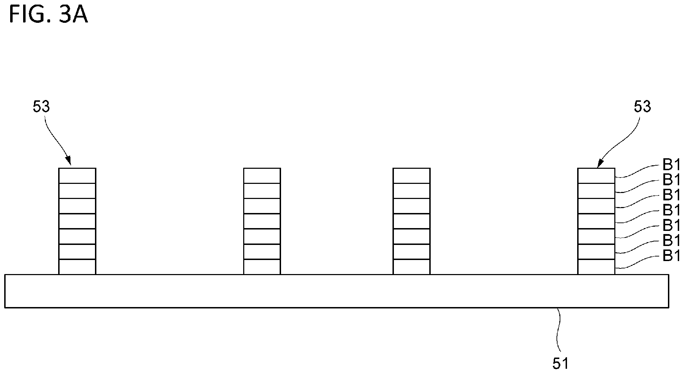

FIG. 3A to FIG. 3C are schematic side views of the additively-manufactured object in the middle of manufacturing process of the additively-manufactured object. In the following manufacturing process, the manufacturing may be performed while switching each welding control mode according to a shape of the manufactured object and a welding condition.

### (Frame Portion Manufacturing Step)

As illustrated in FIG. 3A, the two frame portions 53 are manufactured on the base plate 51. When the frame portions 53 is manufactured, weld beads B1 are formed in a first welding control mode based on the control unit 37 to perform manufacturing (first manufacturing step).

Specifically, the weld beads B1 are formed by forward and reverse feeding control as the first welding control mode based on the control unit 37.

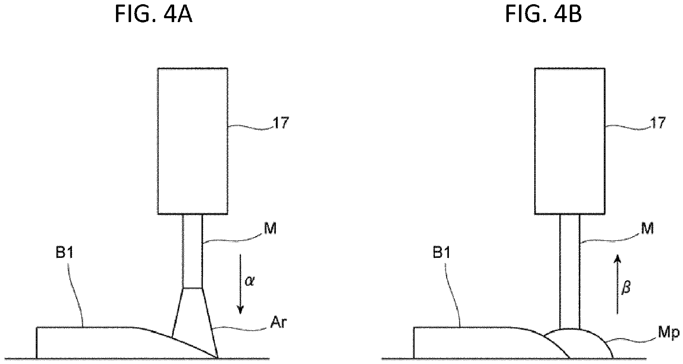

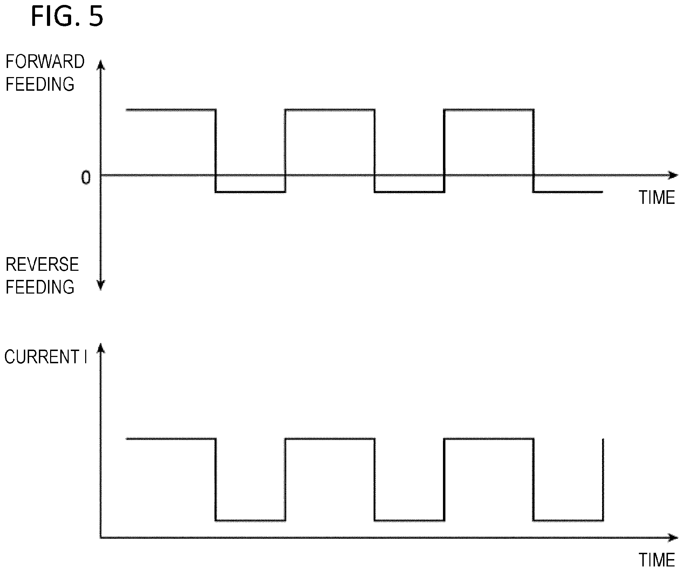

As illustrated in FIG. 4A and FIG. 4B, in the forward and reverse feeding control, when the weld beads B1 are formed by the torch 17, the control unit 37 controls the filler metal supply unit 21, and alternately switches between forward feeding (direction of an arrow α in FIG. 4A) in which the filler metal M, which is a welding wire, protrudes from the torch 17 and reverse feeding (direction of an arrow β in FIG. 4B) in which the filler metal M is drawn into the torch 17. As illustrated in FIG. 5, the control unit 37 controls the power source 15 to synchronize a waveform of a current I supplied to the filler metal M with respect to the forward feeding and reverse feeding of the filler metal M which are alternately switched.

In the forward and reverse feeding control, when the filler metal M is fed in a forward direction, the tip of the filler metal M reaches a molten pool Mp and causes a short-circuit state, an arc Ar is extinguished, and the current I decreases (see FIG. 4B). In this state, the filler metal M is fed in a reverse direction. Then, a droplet at the tip of the filler metal M is cut off, the short circuit is opened, and the arc Ar is generated again (see FIG. 4A). In this cycle, by synchronizing the current waveform, stable droplet transfer becomes possible, and the stable weld beads B1 are formed with a low heat input.

That is, by performing the forward and reverse feeding control, the weld beads B1 can be formed with a low heat input, and the weld beads B1 can be formed into a precise shape. Therefore, the frame portion 53 manufactured by the first welding control mode including the forward and reverse feeding control is manufactured with high precision.

### (Protruding Portion Manufacturing Step)

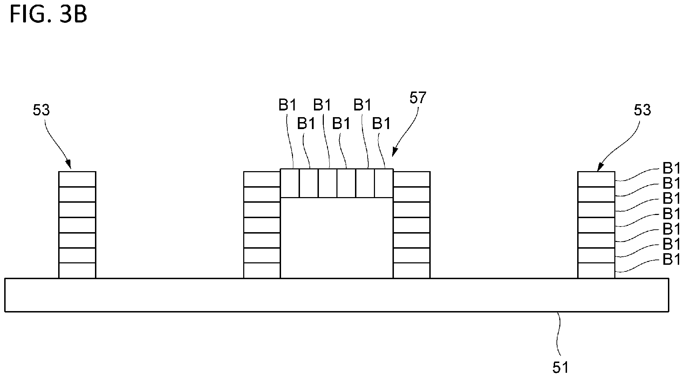

As illustrated in FIG. 3B, the protruding portion 57 that spans the upper ends of the two manufactured frame portions 53 is manufactured. When the protruding portion 57 is manufactured, the weld beads B 1 are formed in the first welding control mode including the forward and reverse feeding control based on the control unit 37 to perform manufacturing (first manufacturing step).

Specifically, side portions at the upper ends of the frame portions 53 are used as base portions, and the weld beads B1 are formed and connected in sequence by the torch 17 so as to protrude sideways from the base portions by the forward and reverse feeding control. Accordingly, the protruding portion 57 including the plurality of weld beads B1 is manufactured on the upper ends of the frame portions 53. In this case, the gravity acts on the weld beads B1 to be formed, but the weld beads B1 formed by the forward and reverse feeding control are formed with a low heat input, so that the dripping due to an influence of the gravity can be prevented. The weld beads B1 that constitute the protruding portion 57 are preferably deposited in sequence from both the frame portions 53 and connected at an intermediate portion, and may also be deposited in sequence from one frame portion 53 to the other frame portion 53.

### (Internal Manufacturing Step)

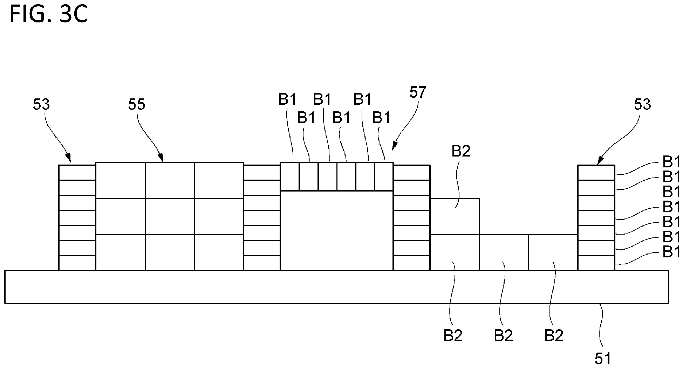

As illustrated in FIG. 3C, the internal manufactured portion 55 is manufactured inside the frame portion 53. When the internal manufactured portion 55 is manufactured, weld beads B2 are formed in a second welding control mode based on the control unit 37 to perform manufacturing (second manufacturing step).

Specifically, the weld beads B2 are formed by constant voltage power supply control as the second welding control mode based on the control unit 37. In the constant voltage power supply control, the current is supplied from the power source 15 to the filler metal M at a constant voltage.

In the constant voltage power supply control, the control unit 37 controls the filler metal supply unit 21 and the power source 15 to feed the filler metal M from the torch 17 at a constant speed and to generate an arc at a constant voltage.

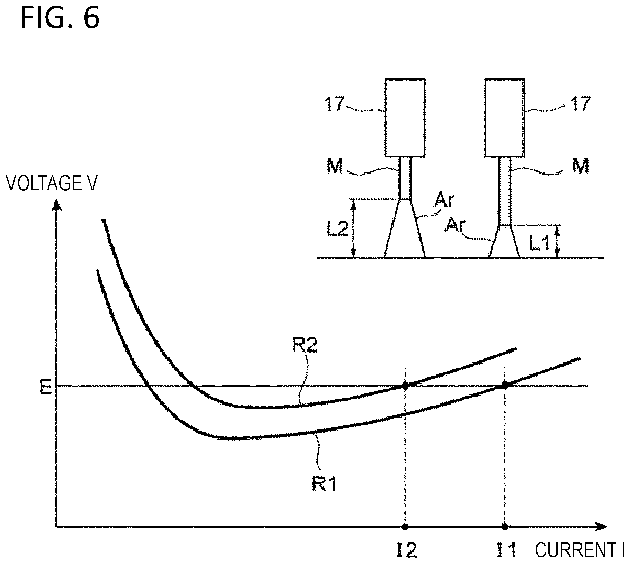

FIG. 6 is an illustrative diagram illustrating characteristic curves of the arc Ar in the constant voltage power supply control, where R1 indicates the arc characteristic curve when an arc length is L1, and R2 indicates the arc characteristic curve when an arc length is L2.

As illustrated in FIG. 6, when the arc Ar is generated at a voltage E and the arc length increases from L1 to L2, a current value decreases from I1 to I2. As a result, a melting speed of the filler metal M decreases as the current value decreases, the tip of the filler metal M approaches a base, and the arc length decreases. When the arc length decreases from L2 to L1, the current value increases from I2 to I1, the melting speed of the filler metal M increases, and the arc length increases.

Accordingly, in the constant voltage power supply control, the weld beads B2 can be formed at high current density and at high speed due to self-regulation of the arc length.

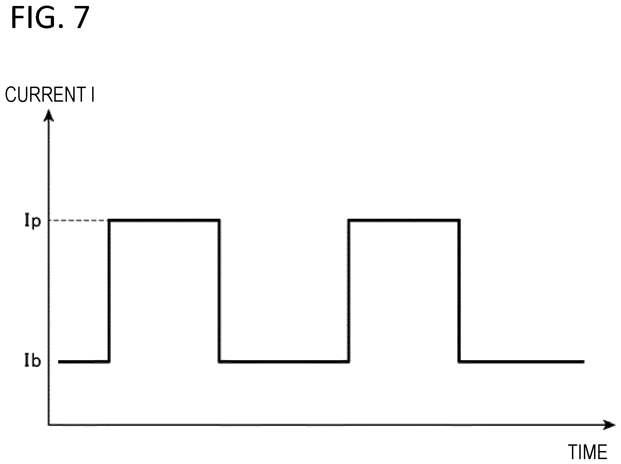

The second welding control mode may be pulse power supply control. As illustrated in FIG. 7, the pulse power supply control is power source control in which a pulse current Ip, which is a high current, is periodically caused to flow, and after the pulse current Ip, a base current Ib, which is a low current, is caused to flow. Thanks to the pulse power supply control, by periodically passing the pulse current Ip, the arc can be concentrated and the weld beads B2 can be formed at high speed.

Thus, in the second welding control mode including the constant voltage power supply control or the pulse power supply control, the weld beads B2 can be formed with a higher heat input with respect to the weld beads B1 formed by the forward and reverse feeding control in the first welding control mode. Therefore, the weld beads B2 fits well to the base plate 51 as the base, and the weld beads B2 of the lower layer, and is also formed without a gap with respect to the frame portion 53. Accordingly, by manufacturing the internal manufactured portion 55 with the weld beads B2 formed in the second welding control mode, the inside of the frame portion 53 can be rapidly filled while the occurrence of the unwelded portion is prevented.

By the above step, the internal manufactured portion 55 is manufactured inside the frame portion 53, and the additively-manufactured object W in which the protruding portion 57 spans the upper ends of the two frame portions 53 is manufactured (see FIG. 2).

As described above, in the method for manufacturing the additively-manufactured object in the present embodiment, in the first manufacturing step, the weld beads are formed in the first welding control mode which is the forward and reverse feeding control in which while the filler metal M sent out from the torch 17 is fed sequentially in a forward direction and a reverse direction, the current waveform of the power supplied from the power source 15 to the filler metal M is synchronized with the forward and reverse feeding of the filler metal M. Accordingly, the precise weld beads B1 can be formed with a low heat input. A manufactured object can be manufactured by selecting the first manufacturing step according to a manufacturing location to form the appropriate weld beads B1. For example, in a location where precision is required in the manufactured object or a location affected by the gravity or the like, the first manufacturing step of forming the weld beads B1 in the first welding control mode including the forward and reverse feeding control is selected, so that the occurrence of the dripping and the like can be prevented and the manufacturing can be performed with high precision.

In the second manufacturing step, the weld beads B2 is formed by the constant voltage power supply control in which a constant voltage current is supplied from the power source 15 or the pulse power supply control in which a pulse current is periodically supplied. Accordingly, the weld beads B2 can be formed with a high heat input, and a manufacturing efficiency can be improved while preventing the occurrence of the unwelded portion.

The frame portion 53 is manufactured with high shape accuracy in the first manufacturing step, and the weld beads B2 is formed inside the frame portion 53 with a high heat input in the second manufacturing step, so that the additively-manufactured object W can be produced with improved overall productivity while the occurrence of the unwelded portion is prevented.

When the protruding portion 57 is manufactured by depositing beads so as to project sideways from the base portion, which is an upper edge of the frame portion 53, the manufacturing is performed by the first manufacturing step capable of forming the precise weld beads B 1 with a low heat input, so that the protruding portion 57 can be manufactured while the dripping due to the influence of gravity is prevented.

In the above embodiment, exemplified is a case where the frame portion 53 and the protruding portion 57 are manufactured in the first welding control mode, and the internal manufactured portion 55 is manufactured in the second welding control mode. The welding control mode may be selected and set based on three-dimensional shape data of the additively-manufactured object to be manufactured.

Here, an example of selecting the welding control mode based on the three-dimensional shape data of the manufactured object to be manufactured is described.

First, based on the three-dimensional shape data of the additively-manufactured object W created by the CAD/CAM unit 31, shape data which is slice data in a cross-sectional view along a depositing direction of the weld beads B in the additively-manufactured object W is created.

Next, the trajectory computing unit 33 creates a depositing plan of the weld beads B based on the created shape data.

The first welding control mode or the second welding control mode is selected based on the created depositing plan of the weld beads B.

Specifically, a cross-sectional area of the weld beads B to be formed is compared with a preset threshold of the cross-sectional area. When the cross-sectional area of the weld beads B is less than the threshold, the first welding control mode, which is the forward and reverse feeding control, is selected, and when the cross-sectional area of the weld beads B is equal to or more than the threshold, the second welding control mode, which is the constant voltage power supply control or the pulse power supply control, is selected.

By the method of selecting the welding control mode, based on the depositing plan, the manufactured object can be manufactured while the welding control mode for forming the weld beads B is appropriately selected in advance, and a condition for depositing the weld beads B can be flexibly set.

The welding control mode may be selected based on a measurement result obtained by measuring a shape of the base for forming the weld beads B. By the method of selecting the welding control mode based on the shape, for example, when an additional weld bead B that was not planned in the original depositing plan is deposited, the additional weld bead B can be formed under an appropriate depositing condition.

Here, an example of selecting the welding control mode based on the shape of the base is described.

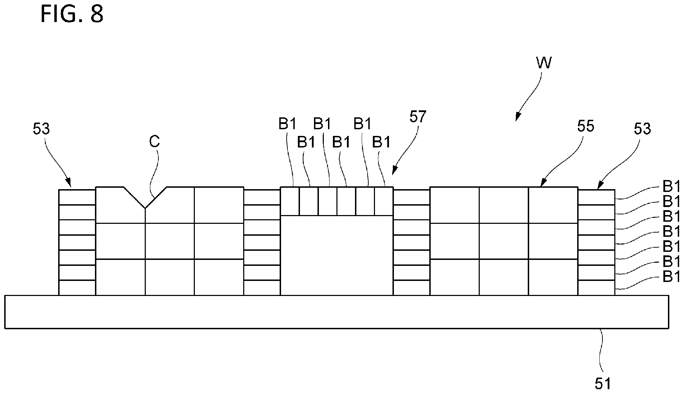

FIG. 8 is a schematic side view of the additively-manufactured object for illustrating the method of selecting the welding control mode based on the shape.

As illustrated in FIG. 8, for example, in an upper portion of the additively-manufactured object W, a defective portion C, which is a valley-shaped recess, may be formed at a boundary portion between the adjacent weld beads B2. That is, even if the weld beads B1 and B2 are deposited based on the depositing plan to manufacture the additively-manufactured object W, a case of deviating from a desired shape may occur. In this case, the defective portion C is repaired by depositing an additional weld bead B.

When the additional weld bead B is deposited, a shape of an upper surface of the additively-manufactured object W which serves as the base is measured, and the welding control mode is selected based on the measurement result.

Specifically, the shape of the upper surface of the additively-manufactured object W, which is the shape of the base for the weld bead B, is measured by, for example, a shape sensor such as a three-dimensional laser measuring device or a three-dimensional shape measuring camera. Next, an amount of deposited metal for the weld bead B to be formed is calculated based on the measurement result. The first welding control mode or the second welding control mode is selected based on the calculated amount of deposited metal for the weld bead B.

For example, the cross-sectional area is calculated from the amount of deposited metal for the additionally formed weld bead B, and is compared with the preset threshold of the cross-sectional area. When the cross-sectional area of the additional weld bead B is less than the threshold, the first welding control mode, which is the forward and reverse feeding control, is selected, and when the cross-sectional area of the weld bead B is equal to or more than the threshold, the second welding control mode, which is the constant voltage power supply control or the pulse power supply control, is selected.

By the method of selecting the welding control mode, the welding condition for the weld bead B can be flexibly selected according to the shape of the base, and the appropriate weld bead B can be formed.

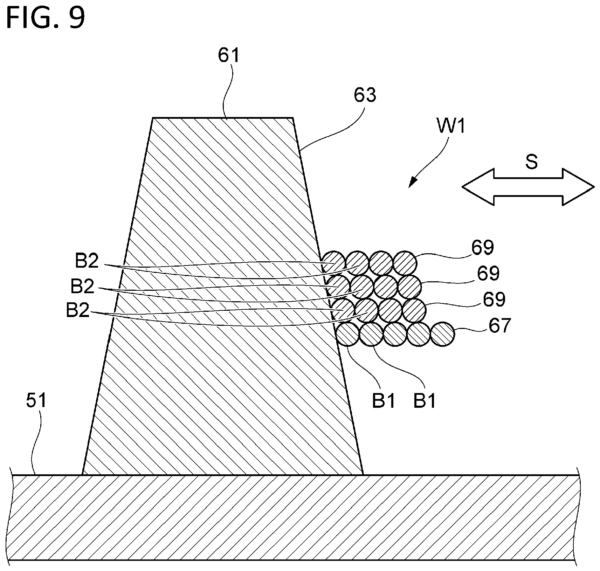

Next, another example of manufacturing the manufactured object by the manufacturing method in the above embodiment is described. FIG. 9 is a cross-sectional view of another additively-manufactured object W1.

As illustrated in FIG. 9, the additively-manufactured object W1 is formed on a base material 61 placed on the base plate 51. The base material 61 is formed in a sectional trapezoidal shape, and a side surface of the base material 61 is inclined upward. The weld beads B1 and B2 are formed on a base surface 63 which includes the inclined side surface of the base material 61. The base surface 63 includes a protruding portion 67 including the weld beads B1, and a plurality of bead layers 69 including the weld beads B2. The protruding portion 67 including the weld beads B1 is formed along a side S, and the bead layers 69 including the weld beads B2 are deposited on an upper portion of the protruding portion 67.

Next, a case of manufacturing the additively-manufactured object W1 is described.

First, the protruding portion 67 is manufactured on the base surface 63 of the base material 61. When the protruding portion 67 is manufactured, the weld beads B1 are formed in the first welding control mode including the forward and reverse feeding control to perform manufacturing (first manufacturing step).

Specifically, the base surface 63 of the base material 61 is used as a base portion, and the weld beads B1 are formed and connected in sequence by the torch 17 so as to protrude sideways from the base portion by the forward and reverse feeding control. Accordingly, the protruding portion 67 including the plurality of weld beads B1 is manufactured on the base surface 63. In this case, the gravity acts on the weld beads B1 to be formed, but the weld beads B1 formed by the forward and reverse feeding control are formed with a low heat input, so that the dripping due to the influence of the gravity can be prevented.

Next, the protruding portion 67 is used as a base, the weld beads B2 are formed on the upper portion of the protruding portion 67 in the second welding control mode including the constant voltage power supply control or the pulse power supply control, and the bead layers 69 are deposited (second manufacturing step).

As a result, the weld beads B2 fit well to the protruding portion 67, which is the base, and the lower bead layer 69, and are also formed without a gap with respect to the base surface 63. Accordingly, the bead layers 69 are formed with the weld beads B2 formed in the second welding control mode, so that the bead layers 69 can be efficiently deposited on the upper portion of the protruding portion 67 while the occurrence of the unwelded portion is prevented.

In this another embodiment, the weld beads B2 are deposited by the second manufacturing step on the upper portion of the protruding portion 67 manufactured by the first manufacturing step. Accordingly, the protruding portion 67 is used as the base, and the weld beads B2 can be rapidly deposited on the protruding portion 67, and the overall productivity can be improved while the occurrence of the unwelded portion is prevented.

As described above, the present invention is not limited to the above embodiments, and combinations of the respective configurations of the embodiments, and changes and applications made by those skilled in the art based on the description and the common technology are also intended by the present invention and are included within the scope to be protected.

As described above, the present description discloses the following matters.
(1) A method for manufacturing an additively-manufactured object, comprising forming weld beads obtained by melting and solidifying a filler metal sent out from a torch and depositing the weld beads to manufacture an additively-manufactured object, the method comprising:
   a first manufacturing step of forming and depositing the weld bead in a first welding control mode; and
   a second manufacturing step of forming and depositing the weld bead in a second welding control mode with a higher heat input than in the first welding control mode,
   wherein the first welding control mode in the first manufacturing step is a forward and reverse feeding control in which, while the filler metal sent out from the torch is fed sequentially in a forward direction and a reverse direction, a current waveform of a power supplied to the filler metal from a power source is synchronized with the forward and reverse feeding of the filler metal.

   In the method for manufacturing the additively-manufactured object in this configuration, in the first manufacturing step, the weld bead is formed in the first welding control mode which is the forward and reverse feeding control in which while the filler metal sent out from the torch is fed sequentially in a forward direction and a reverse direction, the current waveform of the power supplied from the power source to the filler metal is synchronized with the forward and reverse feeding of the filler metal. Accordingly, the precise weld bead can be formed with a low heat input. The manufactured object can be manufactured by selecting the first manufacturing step according to a manufacturing location and forming the appropriate weld bead. For example, in a location where precision is required in the manufactured object or a location affected by the gravity or the like, the first manufacturing step of forming the weld bead in the first welding control mode including the forward and reverse feeding control is selected, so that the occurrence of the dripping and the like can be prevented and the manufacturing can be performed with high precision. In the second manufacturing step with the second welding control mode where the forward and reverse feeding control is not performed, the weld bead is formed with a high heat input, so that manufacturing efficiency can be improved and the occurrence of the unwelded portion can be prevented.
(2) The method for manufacturing an additively-manufactured object according to (1), wherein
   the second welding control mode in the second manufacturing step is a constant voltage power supply control in which a current is supplied at a constant voltage from the power source, or a pulse power supply control in which a pulse current is periodically supplied.

In the method for manufacturing the additively-manufactured object in this configuration, in the second manufacturing step, the weld bead is formed by the constant voltage power supply control in which the constant voltage current is supplied from the power source or the pulse power supply control in which the pulse current is periodically supplied. Accordingly, the weld bead can be formed with a high heat input, and the manufacturing efficiency can be improved while the occurrence of the unwelded portion is prevented.

A location where precision is required or a location affected by the gravity or the like is manufactured by the first manufacturing step with the first welding control mode, and a location where efficient manufacturing is required while internal defects are prevented is manufactured by the second manufacturing step with the second welding control mode, so that a high-precision and high-quality manufactured object can be efficiently manufactured.

(3) The method for manufacturing an additively-manufactured object according to (1) or (2), wherein
a frame portion is manufactured by the first manufacturing step, and
an internal manufactured portion is manufactured inside the frame portion by the second manufacturing step.

In the method for manufacturing the additively-manufactured object in this configuration, the frame portion is manufactured with high shape accuracy in the first manufacturing step, and the weld bead is formed inside the frame portion with a high heat input in the second manufacturing step, so that the additively-manufactured object can be manufactured with improved overall productivity while the occurrence of the unwelded portion is prevented.

(4) The method for manufacturing an additively-manufactured object according to any one of (1) to (3), wherein
a protruding portion is manufactured by depositing the weld bead so as to project sideways from a base portion by the first manufacturing step.

In the method for manufacturing the additively-manufactured object in this configuration, when the protruding portion is manufactured by depositing the bead so as to project sideways from the base portion, the manufacturing is performed by the first manufacturing step capable of forming the precise weld bead with a low heat input, so that the protruding portion can be manufactured while the dripping due to the influence of gravity is prevented.

(5) The method for manufacturing an additively-manufactured object according to (4), wherein
the weld bead is deposited on an upper portion of the protruding portion by the second manufacturing step.

In the method for manufacturing the additively-manufactured object in this configuration, the weld bead is deposited by the second manufacturing step on the upper portion of the protruding portion manufactured by the first manufacturing step. Accordingly, the protruding portion is used as a base, and the weld bead can be rapidly deposited on the protruding portion, and the overall productivity can be improved while the occurrence of the unwelded portion is prevented.

(6) The method for manufacturing an additively-manufactured object according to any one of (1) to (5), wherein
shape data in a cross-sectional view along a depositing direction of the weld beads in the additively-manufactured object to be manufactured is created based on three-dimensional shape data of the additively-manufactured object,
a depositing plan of the weld beads is created based on the shape data, and
the first welding control mode or the second welding control mode is selected based on the depositing plan of the weld beads.

In the method for manufacturing the additively-manufactured object in this configuration, the shape data is created based on the three-dimensional shape data of the manufactured object, and the depositing plan of the weld beads is created from the shape data. The first welding control mode or the second welding control mode for forming the weld bead is selected based on the depositing plan. That is, based on the depositing plan, the manufactured object can be manufactured while the welding control mode for forming the weld bead is selected in advance, and a condition for depositing the weld bead can be flexibly set.

(7) The method for manufacturing an additively-manufactured object according to any one of (1) to (6), wherein
when the weld bead is formed, a shape of a base for the weld bead is measured,
an amount of deposited metal for the weld bead to be formed is calculated based on the measurement result, and
the first welding control mode or the second welding control mode is selected based on the calculated amount of deposited metal.

In the method for manufacturing the additively-manufactured object in this configuration, the shape of the base for the weld bead is measured, the amount of deposited metal for the weld bead to be formed is calculated based on the measurement result, and the first welding control mode or the second welding control mode is selected based on the calculated amount of deposited metal. Accordingly, the welding condition for the weld bead can be flexibly selected according to the shape of the base, and an appropriate weld bead can be formed.

The present application is based on Japanese patent application No. 2020-121580 filed on July 15, 2020, contents of which are incorporated herein by reference.

### REFERENCE SIGNS LIST

- 17:: Torch
- 53:: Frame portion
- 55:: Internal manufactured portion
- 57, 67:: Protruding portion
- B,B1,B2:: Weld bead
- M: Filler: metal
- W, W1:: Additively-manufactured object

## Claims

1. A method for manufacturing an additively-manufactured object, comprising forming weld beads obtained by melting and solidifying a filler metal sent out from a torch and depositing the weld beads to manufacture an additively-manufactured object, the method comprising:
a first manufacturing step of forming and depositing the weld bead in a first welding control mode; and
a second manufacturing step of forming and depositing the weld bead in a second welding control mode with a higher heat input than in the first welding control mode,
wherein the first welding control mode in the first manufacturing step is a forward and reverse feeding control in which, while the filler metal sent out from the torch is fed sequentially in a forward direction and a reverse direction, a current waveform of a power supplied to the filler metal from a power source is synchronized with the forward and reverse feeding of the filler metal.

2. The method for manufacturing an additively-manufactured object according to claim 1, wherein
the second welding control mode in the second manufacturing step is a constant voltage power supply control in which a current is supplied at a constant voltage from the power source, or a pulse power supply control in which a pulse current is periodically supplied.

3. The method for manufacturing an additively-manufactured object according to claim 1, wherein
a frame portion is manufactured by the first manufacturing step, and
an internal manufactured portion is manufactured inside the frame portion by the second manufacturing step.

4. The method for manufacturing an additively-manufactured object according to claim 2, wherein
a frame portion is manufactured by the first manufacturing step, and
an internal manufactured portion is manufactured inside the frame portion by the second manufacturing step.

5. The method for manufacturing an additively-manufactured object according to claim 1, wherein
a protruding portion is manufactured by depositing the weld bead so as to project sideways from a base portion by the first manufacturing step.

6. The method for manufacturing an additively-manufactured object according to claim 2, wherein
a protruding portion is manufactured by depositing the weld bead so as to project sideways from a base portion by the first manufacturing step.

7. The method for manufacturing an additively-manufactured object according to claim 3, wherein
a protruding portion is manufactured by depositing the weld bead so as to project sideways from a base portion by the first manufacturing step.

8. The method for manufacturing an additively-manufactured object according to claim 4, wherein
a protruding portion is manufactured by depositing the weld bead so as to project sideways from a base portion by the first manufacturing step.

9. The method for manufacturing an additively-manufactured object according to any one of claims 5 to 8, wherein
the weld bead is deposited on an upper portion of the protruding portion by the second manufacturing step.

10. The method for manufacturing an additively-manufactured object according to any one of claims 1 to 8, wherein
shape data in a cross-sectional view along a depositing direction of the weld beads in the additively-manufactured object to be manufactured is created based on three-dimensional shape data of the additively-manufactured object,
a depositing plan of the weld beads is created based on the shape data, and
the first welding control mode or the second welding control mode is selected based on the depositing plan of the weld beads.

11. The method for manufacturing an additively-manufactured object according to claim 9, wherein
shape data in a cross-sectional view along a depositing direction of the weld beads in the additively-manufactured object to be manufactured is created based on three-dimensional shape data of the additively-manufactured object,
a depositing plan of the weld beads is created based on the shape data, and
the first welding control mode or the second welding control mode is selected based on the depositing plan of the weld beads.

12. The method for manufacturing an additively-manufactured object according to any one of claims 1 to 8, wherein
when the weld bead is formed, a shape of a base for the weld bead is measured,
an amount of deposited metal for the weld bead to be formed is calculated based on the measurement result, and
the first welding control mode or the second welding control mode is selected based on the calculated amount of deposited metal.

13. The method for manufacturing an additively-manufactured object according to claim 9, wherein
when the weld bead is formed, a shape of a base for the weld bead is measured,
an amount of deposited metal for the weld bead to be formed is calculated based on the measurement result, and
the first welding control mode or the second welding control mode is selected based on the calculated amount of deposited metal.

14. The method for manufacturing an additively-manufactured object according to claim 10, wherein
when the weld bead is formed, a shape of a base for the weld bead is measured,
an amount of deposited metal for the weld bead to be formed is calculated based on the measurement result, and
the first welding control mode or the second welding control mode is selected based on the calculated amount of deposited metal.

15. The method for manufacturing an additively-manufactured object according to claim 11, wherein
when the weld bead is formed, a shape of a base for the weld bead is measured,
an amount of deposited metal for the weld bead to be formed is calculated based on the measurement result, and
the first welding control mode or the second welding control mode is selected based on the calculated amount of deposited metal.
